# EUROPÄISCHE PATENTSCHRIFT

(11) **EP 3 847 131 B1**
(45) Veröffentlichungstag und Bekanntmachung des Hinweises auf die Patenterteilung: **01.03.2023**
(21) Anmeldenummer: 19723036.0
(22) Anmeldetag: 30.04.2019
(51) Int. Cl.: C01B 33/037, C22B 9/10

(54) **VERFAHREN ZUR RAFFINATION VON ROHSILICIUM-SCHMELZEN MITTELS EINES PARTIKULÄREN MEDIATORS**
METHOD FOR REFINING CRUDE SILICON MELTS USING A PARTICULATE MEDIATOR
PROCÉDÉ D'AFFINAGE DE SILICIUM FONDU AU MOYEN D'UN MÉDIATEUR PARTICULAIRE

(43) Veröffentlichungstag der Anmeldung: 14.07.2021
(73) Patentinhaber: Wacker Chemie AG, 81737 München (DE)
(72) Erfinder: RIMBÖCK, Karl-Heinz, 84431 Heldenstein (DE); MAUTNER, Konrad, 84489 Burghausen (DE)
(74) Vertreter: Fritz, Helmut
(86) Internationale Anmeldenummer: PCT/EP2019/061031
(87) Internationale Veröffentlichungsnummer: WO 2020/221439

(56) Entgegenhaltungen:
- WO-A2-2010/012273
- DE-A1-102017 001 451
- US-B2- 7 682 585

## Beschreibung

Die Erfindung betrifft ein Verfahren zur oxidativen Raffination von Rohsilicium-Schmelze bei der Herstellung von technischem Silicium unter Zugabe eines feinteiligen Mediators in die Rohsilicium-Schmelze mittels pneumatischer Förderung.

Silicium findet in technischer Qualität (technisches Silicium) heute v.a. Anwendung in silicothermischen Prozessen, in der Metallgewinnung, als Desoxidationsmittel bei der Stahlherstellung, und dient als Legierungsbestandteil von Gusslegierungen des Aluminiums, Kupfers, Titans und Eisens sowie als Ausgangsmaterial für chemische Verbindungen.

Industriell wird Silicium von technischer Qualität durch carbothermische Reduktion von Quarz (SiO₂; gegebenenfalls weitere Zusätze wie beispielsweise Fe-haltige Abfallstoffe [Ferrosilicium] oder Calciumcarbid [Calciumsilicium]) bei hohen Temperaturen (um 2000 °C) und Atmosphärendruck im elektrischen Ofen (Lichtbogenreduktionsofen) gemäß Nettoreaktionsgleichung (1) hergestellt. Der Prozess wird im Standardwerk "Production of High Silicon Alloys" (A. Schei, J.K. Tuset, H. Tveit, Production of High Silicon Alloys, 1998, Tapir forlag, Trondheim) ausführlich beschrieben.

SiO₂ + 2 C -> Si (1) + 2 CO (g) (1)

Während des Betriebs liegen Edukte, Intermediate und Produkte in verschiedenen Aggregatszuständen vor: fest (C, SiC, SiO₂, Si), flüssig (Si, SiO₂) sowie gasförmig (vorwiegend CO, SiO). Als Kohlenstoffquelle wird üblicherweise eine Reduktionsmischung aus Koks, Petrolkoks, Steinkohle, Holzkohle und Holzteilchen verwendet. Im Ofen herrscht eine stark reduzierende Atmosphäre, die sich insbesondere aus SiO und CO zusammensetzt. SiO₂ und C bewegen sich im laufenden Betrieb nach unten, während SiO und CO nach oben strömen. Hierbei werden intermediäre Spezies gemäß folgender Reaktionsgleichungen (2)-(7) gebildet:

SiO₂ + C → SiO + CO (2)

SiO + 2 C → SiC + CO (3)

SiO₂ + 2 SiC → 3 Si + 2 CO (4)

2 SiO₂ + SiC → 3 SiO + CO (5)

SiO₂ + CO → SiO + CO₂ (6)

2 CO₂ + SiC → SiO + 3 CO (7)

Silicium wird hauptsächlich durch die in Reaktion (8) gezeigte Reaktion gebildet.

SiO + SiC → 2 Si + CO (8)

Derartige Hochtemperatur-Prozesse machen eine möglichst kontinuierliche Fahrweise notwendig. Sowohl die Rohstoffe als auch das flüssige Rohsilicium werden in Intervallen zu- bzw. abgeführt. Letzteres erfolgt üblicherweise durch Abstechen des Ofens und anschließendem Überführen des flüssigen Rohsiliciums (mit einer Temperatur von ca. 1600 bis 1900 °C) in ein Behandlungsgefäß.

Neben den wirtschaftlichen Aspekten eines industriellen Prozesses (beispielsweise Produktivität, Herstellkosten) ist auch die Qualität des hergestellten Produkts von entscheidender Bedeutung. Bei Einsatz von metallurgischem Silicium in der Herstellung von chemischen Verbindungen, bspw. Chlorsilanen, werden im Silicium enthaltene Verunreinigungen (beispielsweise Bor in Form von flüchtigen Chloriden) teilweise - trotz zwischengeschalteter Reinigungsstufen - bis hin zu den jeweiligen Endprodukten (bspw. polykristallines Silicium, Silicone) über mehrere Prozessschritte hinweg verschleppt. Je nach Anwendungsgebiet müssen diese Endprodukte jedoch höchsten Qualitätsanforderungen genügen (Halbleiter-/ Pharma-/Nahrungsmittel-/Kosmetik-Industrien). Für die Herstellung selbiger Produkte im industriellen Maßstab ist daher ein qualitativ hochwertiger Ausgangsstoff - metallurgisches Silicium - wichtig.

Die bei der carbothermischen Reduktion von SiO₂ üblicherweise verwendeten Rohstoffe sowie Elektroden enthalten verschiedene Verunreinigungen. Das flüssige Rohsilicium wird üblicherweise in den oben genannten Behandlungsgefäßen oxidativ raffiniert, da an dieser Stelle noch bis zu 5 Masse-% Verunreinigungen im Rohprodukt enthalten sind. Die Raffination von Rohsilicium erfolgt branchenüblich durch Behandlung mit einer reaktiven Gasmischung (beispielsweise Cl₂, O₂, SiCl₄, feuchter H₂ und CO₂ oder Kombinationen daraus; üblicherweise mit einem Inertgas verdünnt) und dem Zusatz von Schlacke-bildenden Additiven (beispielsweise Quarzsand, Kalkstein, Kalkerde, Dolomit, Flussspat, etc.), wobei sich für die Nebenelemente ein Verteilungsgleichgewicht zwischen Silicium- und Schlackephase einstellt. Bei der Raffination fällt die Temperatur der Raffinationsmischung von ca. 1900 °C auf bis zu *ca*. 1500 °C ab. Um zu vermeiden, dass die Mischung erstarrt, wird der Mischung - wie oben beschrieben - ein unter den Betriebsbedingungen gasförmiges Reagenz zugeführt. So bewirkt bspw. das Zuleiten von Sauerstoff die Oxidation von Silicium zu Siliciumdioxid, wobei die freiwerdende Energie die im Behandlungsgefäß befindliche Mischung flüssig hält. Der Begriff "oxidative Raffination" umfasst die Kombination aus Zuleiten einer Sauerstoff-enthaltenden Gasmischung und dem Zusatz eines oder mehrerer Schlacke-Bildner/-s.

Nach beendeter oxidativer Raffination werden Silicium- und Schlackephase der üblicherweise noch flüssigen Mischung getrennt.

Die größten Nachteile bei konventionellen oxidativen Raffinationsmethoden sind Verlust von Silicium über die Schlacke in Form von Siliciumdioxid oder in der Schlacke eingeschlossenes metallisches Silicium sowie ineffiziente Abtrennung von unerwünschten Nebenelementen. Hierdurch vermindert sich sowohl die Wirtschaftlichkeit der Silicium-Herstellung als auch die Qualität des entsprechenden Produkts.

Die Aufgabe der vorliegenden Erfindung bestand darin, die Wirtschaftlichkeit der Herstellung von technischem Silicium sowie die Effizienz der Abtrennung von unerwünschten Nebenelementen und damit die Qualität des Produkts zu verbessern.

WO 2010/012273 A2 offenbart ein Verfahren zum Entfernen von nichtmetallischen Verunreinigungen aus metallurgischem Silicium. Das Verfahren beinhaltet das Aufschmelzen des zu reinigenden metallurgischen Silicium, Einführen von festem halogenidhaltigen Silicium in die Schmelze und Entfernen von Nichtmetallhalogeniden durch Sublimation. Das verwendete halogenidhaltige Silicium ist charakterisiert durch einen Anteil von 1-50 at.-% Halogenid, einer Korngröße von 50-20 000 µm und einer Schüttdichte von 0,2-1,5 g/ cm³. Über die Zugabe des halogenidhaltigen Siliciums zu der Siliciumschmelze werden keine näheren Angaben gemacht. Die Verwendung von gasförmigen Oxidanten zum Entfernen von Verunreinigungen werden ausgeschlossen.

US 7 682 585 B2 offenbart ein Verfahren zur Aufarbeitung einer Siliciumschmelze, bei dem Flussmittelfeststoffe mittels einer Lanze unter Verwendung von Stickstoff oder Inertgas der Schmelze zugeführt werden.

DE 10 2017 001451 A1 beschreibt ein allgemeines Verfahren zum Einbringen von körnigen Feststoffen in Metallschmelzen, wobei feinkörnige Zusatzstoffe unter Verwendung von Druckgas der Schmelze zugeführt werden.

Die Aufgabe der vorliegenden Erfindung bestand darin, die Wirtschaftlichkeit der Herstellung von technischem Silicium sowie die Effizienz der Abtrennung von unerwünschten Nebenelementen und damit die Qualität des Produkts zu verbessern.

Gegenstand der Erfindung ist ein Verfahren zur oxidativen Raffination von Rohsilicium-Schmelze bei der Herstellung von technischem Silicium, bei dem der Rohsilicium-Schmelze während der Raffination ein feinteiliger Mediator mit einem Partikelgrößenparameter d₅₀ von 1 bis 200 µm zugesetzt wird, welcher einen Mindestgehalt an metallischem Silicium von 8 Masse-% sowie zumindest eines oder mehrere der Elemente H, C, O, F, Cl, Ca, Fe und Al enthält,
wobei die Zugabe des feinteiligen Mediators in die Rohsilicium-Schmelze mittels pneumatischer Förderung mit einem Gas erfolgt.

Überraschenderweise hat sich gezeigt, dass sich durch Zusatz des feinteiligen Mediators während der Raffination von Rohsilicium-Schmelzen die Produktivität der Herstellung von technischem Silicium sowie die Qualität des technischen Siliciums erhöhen läßt. Ursächlich hierfür sind zum einen, die Verminderung von Silicium-Verlusten durch eine effizientere Phasentrennung zwischen Silicium und Schlacke und zum anderen, die effizientere Abtrennung von unerwünschten Begleitelementen. Ersteres führt somit zu höheren Ausbeuten an technischem Silicium und damit zu einem niedrigeren spezifischen Energieverbrauch zur Herstellung von technischem Silicium. Ein weiterer Vorteil des erfindungsgemäßen Verfahrens besteht in der Möglichkeit, Nebenan- und Abfälle im Sinne der Kreislaufwirtschaft zu verwerten bzw. zu recyceln.

Die Rohsilicium-Schmelzen werden vorzugsweise durch carbothermische Reduktion von Quarz mit Kohle im elektrischen Ofen hergestellt.

Die oxidative Raffination der Rohsilicium-Schmelze erfolgt vorzugsweise durch Behandlung mit einer reaktiven Gasmischung, die vorzugsweise Verbindungen enthält, die ausgewählt werden aus Cl₂, O₂, SiCl₄, feuchtes H₂ und CO₂ und Kombinationen daraus. Vorzugsweise wird die reaktive Gasmischung mit einem Inertgas verdünnt, das ausgewählt wird aus Stickstoff und Argon und Kombinationen daraus. Besonders bevorzugt als Raffinationsgas, ist ein Sauerstoff-haltiges Gasgemisch, welches mit einem Inertgas verdünnt und gegebenenfalls mit Feuchtigkeit beaufschlagt sein kann.

Die Zugabe des Mediators zur Rohsilicium-Schmelze, d.h. in das Behandlungsgefäß, das die Rohsilicium-Schmelze enthält, erfolgt bevorzugt mittels einer Lanze. Bei dem zur pneumatischen Förderung des Mediators verwendeten Gas kann es um ein reines Gas oder eine Gasmischung handeln. Bevorzugt wird zur pneumatischen Förderung des Mediators ein Teil oder die gesamte reaktive Gasmischung verwendet, welche für die oxidative Raffination eingesetzt wird.

Das erfindungsgemäße Verfahren erhöht so die Wirtschaftlichkeit des Herstellprozesses von technischem Silicium sowie die Qualität des Produkts im Vergleich zu herkömmlichen Verfahren.

Technisches Silicium weist einen Si-Gehalt von <99,9 Masse-% bezogen auf das Gesamtgewicht des technischen Siliciums auf. Die Begleitelemente werden meistens ausgewählt aus Fe, Ca, Al, Ti, Cu, Mn, Cr, V, Ni, Mg, Co, W, Mo, As, Sb, Bi, S, Se, Te, Zr, Ge, Sn, Pb, Zn, Cd, Sr, Ba, Y, B, C, P und O.

Der Si-Gehalt wird wie folgt bestimmt: 100 Masse-% abzüglich der Gewichtsanteile der Begleitelemente.

Bedeutende Sorten von Technischem Silicium die im Verfahren raffiniert werden sind Calciumsilicium (Calciumdisilicid, CaSi₂) mit 55-65 Masse-% Si und 35-45 Masse-% Ca, Ferrosilicium mit 45-90 Masse-% Si und 10-55 Masse-% Fe sowie metallurgisches Silicium mit 98-99,5 Masse-% Si.

Das hergestellte technische Silicium weist vorzugsweise ein Si-Gehalt von mindestens 90 Masse-%, besonders bevorzugt mindestens 95 Masse-%, insbesondere mindestens 97 Masse-% auf.

Der Mediator wird bevorzugt als Partikelmischung eingesetzt. Die Partikel des Mediators weisen vorzugsweise einen Partikelgrößenparameter dso von 1 bis 200 µm, besonders bevorzugt von 5 bis 150 µm, ganz besonders bevorzugt von 10 bis 100 µm, insbesondere von 15 bis 75 µm auf.

Der Mediator wird bei der oxidativen Raffination von Rohsilicium-Schmelze der Rohsilicium-Schmelze zusätzlich zu oder statt den herkömmlichen Schlacke-bildenden Additiven zugesetzt. Schlacke-bildenden Additive werden vorzugsweise ausgewählt aus Quarzsand, Kalkstein, Kalkerde, Dolomit und Flussspat.

In einer bevorzugten Ausführungsform beträgt der Gewichtsanteil von reaktivem Kohlenstoff am Mediator, bezogen auf die Gesamtmasse des Mediators, höchstens 0,1, bevorzugt höchstens 0,08, besonders bevorzugt höchstens 0,06, insbesondere höchstens 0,04. Unter "reaktivem Kohlenstoff" soll in der vorliegenden Erfindung der Kohlenstoffanteil des Mediators verstanden werden, der bis zu einer Temperatur von 1100 °C unter thermo-oxidativer Degradation mit O₂ reagiert. Bei reaktivem Kohlenstoff handelt es sich üblicherweise um Kohlenstoff in organischen Verbindungen (z.B. Öle, Fette, Polymere) sowie Kohlenstoff in anorganischen Verbindungen (z.B. Carbonate, Carbide) und elementaren Kohlenstoff in seinen allotropen Formen.

Gemäß einer bevorzugten Ausführungsform weist der Mediator einen Wasser-Gehalt von maximal 5 Masse-%, bevorzugt von maximal 3 Masse-%, besonders bevorzugt von maximal 1 Masse-%, insbesondere von maximal 1000 ppmw auf. Gemäß einer bevorzugten Ausführungsform weist der Mediator einen Sauerstoffgewichtsanteil von maximal 0,4, bevorzugt maximal 0,3, besonders bevorzugt maximal 0,2, insbesondere maximal 0,15, jedoch mindestens 0,01 auf.

Der Mindestgehalt im Mediator im trockenen Zustand an metallischem Silicium beträgt vorzugsweise 10 Masse-%, besonders bevorzugt mindestens 20 Masse-%, ganz besonders bevorzugt mindestens 30 Masse-%, insbesondere mindestens 40 Masse-%.

Vorzugsweise enthält der Mediator Siliciumreste, die vorzugsweise ausgewählt werden aus Nebenprodukten oder Abfällen, der Silicium-herstellenden oder -verarbeitenden Industrien, z.B.
- die bei der Herstellung oder bei der mechanischen Bearbeitung von Silicium, wie poly-, multi- oder einkristallinem Silicium anfallen, wobei es sich bei der mechanischen Bearbeitung insbesondere um Brechen, Mahlen und/oder Sägen handelt;
- die bei der Herstellung von granuliertem Siliciummetall beispielsweise in Wirbelschicht-, Zentrifugal-, Gaszerstäubungs-, Wassergranulat-Verfahren anfallen;

die bei der Herstellung von Silicium technischer Qualität mittels carbothermischer Reduktion von SiO₂ anfallen;
   - die bei der mechanischen Bearbeitung und gegebenenfalls einem oder mehreren Klassierungsverfahren von technischem Silicium anfallen. Bei der mechanischen Bearbeitung kann es sich insbesondere um Brechen und/oder Mahlen handeln. Typische Klassierungsverfahren sind beispielsweise Sieben und/oder Sichten;
die bei der Herstellung von Silanen anfallen. Beispielsweise kann es sich hierbei um neutralisierte Kontaktmasse aus Chlorsilanreaktoren handeln, vor und/oder nach einer Rückgewinnung von Cu; insbesondere der Prozesse Müller-Rochow Direktsynthese, Hydrochlorierung oder Niedertemperaturkonvertierung von Silanen.

Eine Aufreinigung dieser Siliciumreste vor dem erfindungsgemäßen Einsatz in den Mediatoren ist üblicherweise nicht erforderlich.

Vorzugsweise enthält der Mediator mindestens 10 Masse-%, Siliciumreste, besonders bevorzugt mindestens 20 Masse-%, ganz besonders bevorzugt mindestens 30 Masse-%, insbesondere mindestens 50 Masse-% Siliciumreste.

Bevorzugt wird der Mediator einem Zerkleinerungs- (z.B. Mahlen, Brechen), Klassierungs- (z.B. Sieben, Sichten) und/oder Agglomerisationsverfahren (z.B. Pelletieren, Brikettieren, Sintern) unterzogen, um den gewünschten Wert an Partikelgrößenparameter dso zu erhalten.

Die Gesamtporosität eines Stoffes setzt sich zusammen aus der Summe der Hohlräume, die untereinander und mit der Umgebung in Verbindung stehen (offene Porosität; hier, in der vorliegenden Erfindung: effektive Porosität) und den nicht miteinander verbundenen Hohlräumen (geschlossene Porosität). Die Porositätsmessungen werden nach dem Archimedischen Prinzip gemäß ASTM C373-88 durchgeführt. Ferner kann die Porosität eines Materials durch Berechnung aus der absoluten und der apparenten Dichte erfolgen. Die absolute und die apparente Dichte können mittels Gewichtsmessung und Volumenmessung mittels Gaspyknometern bestimmt werden. Die Bestimmung der Dichte fester Stoffe wird in DIN 66137-2:2019-03 beschrieben.

Vorzugsweise weist der Mediator eine mittlere effektive Porosität von höchstens 0,5, besonders bevorzugt von höchstens 0,4, insbesondere von höchstens 0,3 auf.

Die neben dem metallischen Silicium im Mediator vorhandenen Elemente können als Verbindungen oder Legierungen dieser Elemente vorliegen.

Neben den bereits beschriebenen Elementen kann der partikuläre Mediator folgende Begleitelemente enthalten: Si, Li, Na, K, Mg, Ca, Ba, Ti, Zr, V, Cr, Mo, W, Mn, Fe, Co, Ni, Cu, Zn, B, Sn, Pb, N, P, As, Sb, Bi, S.

Vorzugsweise beträgt das Masseverhältnis von Masse (Mediator) zu Masse (Rohsilicium-Schmelze) beim Zusetzen des Mediators 0,01 bis 0,15, besonders bevorzugt 0,02 bis 0,12, ganz besonders bevorzugt 0,03 bis 0,10, insbesondere 0,04 bis 0,09.

Nach beendeter oxidativer Raffination werden die Phasen technisches Silicium und Schlacke der üblicherweise noch flüssigen Mischung getrennt und das flüssige technische Silicium auf einer gekühlten Oberfläche oder in einem gekühlten Medium erstarrt. Dies kann beispielsweise durch Dekantieren der Mischung, Gießen der aufschwimmenden technischen Siliciumphase in eine Mulde und Erstarren des technischen Siliciums in selbiger erfolgen.

Es kann ferner bevorzugt sein, das flüssige technische Silicium gezielt mit Elementen zu dotieren bzw. zu legieren. Dies kann beispielsweise angezeigt sein, wenn das zu produzierende technische Silicium für den Einsatz in der Synthese von Chlorsilanen vorgesehen ist. Hierbei handelt es sich um eines oder mehrere der Elemente aus der Gruppe mit Al, Cu, Sn, Zn, O und P oder eine Verbindung oder mehrere Verbindungen dieser Elemente oder Mischungen dieser Elemente und Verbindungen.

Die Bestimmung des Silicium-Gehalts des Mediators kann beispielsweise über Röntgenfluoreszenzanalyse (RFA), ICPbasierte Analysemethoden (ICP-MS, ICP-OES) oder Atomabsorptionsspektrometrie (AAS).

Die Bestimmung von Partikelgrößenverteilungen kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

Die Bestimmung des Anteils von "reaktivem Kohlenstoff" und des Wassergehalts im Mediator erfolgt vorzugsweise unter Verwendung eines Mehrphasen-Analysators wie bspw. LECO RC-612 (vgl. auch DIN 19539).

### Beispiele

Flüssiges Rohsilicium aus einem kontinuierlichen Herstellprozess für metallurgisches Silicium wurde in einem Behandlungsgefäß aufgefangen, anschließend unter Zusatz verschiedener Mediatoren (mit einem Partikelgrößenparameter d₅₀ von 25 µm; Zugabe durch pneumatische Förderung mit Luft über eine feuerfeste Einblaslanze direkt in das flüssige Rohsilicium) über einen Zeitraum von 100 min oxidativ raffiniert (Raffinationsgas: Sauerstoff/Luft-Gemisch [Sauerstoff-Gehalt bei 30 Vol-% bezogen auf Gesamtvolumen der Gasmischung]; Volumenstrom der Mischung: 16 Nm³/h je 1 t flüssiges Rohsilicium), die Silicium-Phase in eine Mulde dekantiert und schließlich erstarrt. Nach Abkühlen auf Raumtemperatur und mechanischem Entfernen des Siliciums aus der Mulde wurden spezifischer Energieverbrauch pro Tonne Silicium-Produkt und Reinheit des Silicium-Produkts bestimmt. Die Versuche wurden im Vergleich zu herkömmlichen Prozessen ausgewertet: üblicherweise liegt der spezifische Energieverbrauch pro Tonne Silicium-Produkt bei 13,0 MWh/t, wobei die Reinheit des Silicium-Produkts bei ca. 98,5% liegt. Tabelle 1 gibt einen Überblick über die eingesetzten Mediatoren - die Ergebnisse der Versuche sind in Tabelle 2 zusammengefasst.

**Tabelle 1**

| Mediator | Si [Masse%] | Begleitelemente | Gehalt [Masse-%] | | |
|---|---|---|---|---|---|
| | | | Wasser | O | C |
| A | 10 | Fe, Ca, Al, F, Cl | 1 | 35 | 7 |
| B | 10 | Fe, Ca, Al, F, Cl | 0,05 | 0,5 | 5 |
| C | 10 | Fe, Ca, Al, F | 0,1 | 5 | 2 |
| D | 10 | Fe, Ca, Al | 0,1 | 5 | 1,5 |
| E | 10 | Fe, Ca, Al | 0,1 | 15 | 1,5 |
| F | 20 | Fe, Ca, Al | 0,1 | 5 | 1,5 |
| G | 40 | Fe, Ca, Al | 0,1 | 5 | 1,5 |
| H | 50 | Fe, Ca, Al | 0,1 | 5 | 1,5 |
| I | 60 | Fe, Ca, Al | 0,1 | 5 | 1,5 |
| J | 80 | Fe, Ca, Al | 0,1 | 5 | 1,5 |

**Tabelle 2**

| Versuch | Mediator | Massenverhältnis m(Mediator)/ m(Rohsilicium) | Spezifischer Energieverbrauch [MWh/t] | Reinheit [Masse-% Si] |
|---|---|---|---|---|
| 1 | A | 0,07 | 12,92 | 98,8 |
| 2 | B | 0,07 | 12,91 | 98,8 |
| 3 | C | 0,07 | 12,91 | 98,7 |
| 4 | D | 0,07 | 12,9 | 98,8 |
| 5 | E | 0,07 | 12,9 | 98,8 |
| 6 | F | 0,07 | 12,85 | 98,9 |
| 7 | G | 0,07 | 12,87 | 98,8 |
| 8 | H | 0,07 | 12,8 | 98,9 |
| 9 | I | 0,07 | 12,78 | 98,9 |

## Patentansprüche

1. Verfahren zur oxidativen Raffination von Rohsilicium-Schmelze bei der Herstellung von technischem Silicium, bei dem der Rohsilicium-Schmelze während der Raffination ein feinteiliger Mediator mit einem Partikelgrößenparameter d₅₀ von 1 bis 200 µm zugesetzt wird, welcher einen Mindestgehalt an metallischem Silicium von 8 Masse-% sowie zumindest eines oder mehrere der Elemente H, C, O, F, Cl, Ca, Fe und Al enthält,
wobei die Zugabe des feinteiligen Mediators in die Rohsilicium-Schmelze mittels pneumatischer Förderung mit einem Gas erfolgt.

2. Verfahren nach Anspruch 1, bei dem das technische Silicium ein Si-Gehalt von mindestens 95 Masse-% aufweist.

3. Verfahren nach einem oder mehreren der voranstehenden Ansprüche, bei dem der Mediator Siliciumreste enthält, die ausgewählt werden aus Nebenprodukten oder Abfällen, die bei der Herstellung oder bei der mechanischen Bearbeitung von Silicium anfallen.

4. Verfahren nach einem oder mehreren der voranstehenden Ansprüche, bei dem die Zugabe des Mediators zur Rohsilicium-Schmelze mittels einer Lanze erfolgt.

5. Verfahren nach einem oder mehreren der voranstehenden Ansprüche, bei dem das Gas, mit dem die Zugabe des feinteiligen Mediators in die Rohsilicium-Schmelze erfolgt, Bestandteile enthält, die ausgewählt werden aus Cl₂, O₂, SiCl₄, feuchtes H₂ und CO₂ und Kombinationen daraus.

6. Verfahren nach einem oder mehreren der voranstehenden Ansprüche, bei dem der Mediator einen Sauerstoffgewichtsanteil von maximal 0,4 Masse-% aufweist.

7. Verfahren nach einem oder mehreren der voranstehenden Ansprüche, bei dem der Mediator einen Wasser-Gehalt von maximal 5 Masse-% aufweist.

8. Verfahren nach einem oder mehreren der voranstehenden Ansprüche, bei dem der Gewichtsanteil von reaktivem Kohlenstoff am Mediator, bezogen auf die Gesamtmasse des Mediators, höchstens 0,1 beträgt, wobei "reaktiver Kohlenstoff" der Kohlenstoffanteil des Mediators ist, der bis zu einer Temperatur von 1100 °C unter thermo-oxidativer Degradation mit O₂ reagiert.

9. Verfahren nach einem oder mehreren der voranstehenden Ansprüche, bei dem das Masseverhältnis von Masse (Mediator) zu Masse (Rohsilicium-Schmelze) beim Zusetzen des Mediators 0,01 bis 0,15 beträgt.

## Claims

1. Process for the oxidative refining of crude silicon melt during the production of technical-grade silicon, in which during the refining the crude silicon melt has added to it a finely divided mediator having a particle size parameter d₅₀ of 1 to 200 pm, this mediator containing a minimum content of metallic silicon of 8% by mass and also at least one or more of the elements H, C, O, F, Cl, Ca, Fe and Al,
wherein the finely divided mediator is added to the crude silicon melt by means of pneumatic conveying with a gas.

2. Process according to Claim 1, in which the technical-grade silicon has an Si content of at least 95% by mass.

3. Process according to one or more of the preceding claims, in which the mediator contains silicon residues which are selected from by-products or wastes arising in the production or in the mechanical processing of silicon.

4. Process according to one or more of the preceding claims, in which the mediator is added to the crude silicon melt by means of a lance.

5. Process according to one or more of the preceding claims, in which the gas with which the finely divided mediator is added to the crude silicon melt contains constituents selected from Cl₂, O₂, SiCl₄, wet H₂ and CO₂, and combinations of these.

6. Process according to one or more of the preceding claims, in which the mediator has a proportion by weight of oxygen of at most 0.4% by mass.

7. Process according to one or more of the preceding claims, in which the mediator has a water content of at most 5% by mass.

8. Process according to one or more of the preceding claims, in which the proportion by weight of reactive carbon in the mediator, based on the total mass of the mediator, is not more than 0.1, wherein "reactive carbon" is the proportion of carbon in the mediator which reacts with O₂ by thermo-oxidative degradation up to a temperature of 1100°C.

9. Process according to one or more of the preceding claims, in which the mass ratio of mass (mediator) to mass (crude silicon melt) when adding the mediator is 0.01 to 0.15.

## Revendications

1. Procédé de raffinage oxydant de masse fondue de silicium brut lors de la préparation de silicium technique, dans lequel un médiateur finement divisé doté d'un paramètre de taille de particule d₅₀ de 1 à 200 µm est ajouté à la masse fondue de silicium brut pendant le raffinage, lequel contient une teneur minimale en silicium métallique de 8 % en masse ainsi qu'au moins l'un ou plusieurs des éléments H, C, O, F, Cl, Ca, Fe et Al,
l'ajout du médiateur finement divisé dans la masse fondue de silicium brut étant réalisé au moyen d'un transport pneumatique avec un gaz.

2. Procédé selon la revendication 1, dans lequel le silicium technique présente une teneur en Si d'au moins 95 % en masse.

3. Procédé selon l'une quelconque ou plusieurs des revendications précédentes, dans lequel le médiateur contient des résidus de silicium qui sont choisis parmi des sous-produits ou des déchets, qui sont produits lors de la préparation ou lors du traitement mécanique de silicium.

4. Procédé selon l'une quelconque ou plusieurs des revendications précédentes, dans lequel l'ajout du médiateur à la masse fondue de silicium brut est réalisé au moyen d'une lance.

5. Procédé selon l'une quelconque ou plusieurs des revendications précédentes, dans lequel le gaz avec lequel l'ajout du médiateur finement divisé dans la masse fondue de silicium brut est réalisé contient des ingrédients qui sont choisis parmi Cl₂, O₂, SiCl₄, H₂ humide et CO₂ et des combinaisons correspondantes.

6. Procédé selon l'une quelconque ou plusieurs des revendications précédentes, dans lequel le médiateur présente une proportion en poids d'oxygène d'au maximum 0,4 % en masse.

7. Procédé selon l'une quelconque ou plusieurs des revendications précédentes, dans lequel le médiateur présente une teneur en eau d'au maximum 5 % en masse.

8. Procédé selon l'une quelconque ou plusieurs des revendications précédentes, dans lequel la proportion en poids de carbone réactif au niveau du médiateur, par rapport à la masse totale du médiateur, est d'au plus 0,1, le « carbone réactif » étant la proportion de carbone du médiateur qui réagit sous dégradation thermo-oxydante avec O₂ jusqu'à une température de 1 100 °C.

9. Procédé selon l'une quelconque ou plusieurs des revendications précédentes, dans lequel le rapport en masse de masse (médiateur) sur masse (masse fondue de silicium brut) lors de l'ajout du médiateur est de 0,01 à 0,15.
